# EUROPEAN PATENT APPLICATION

(11) **EP 4 737 016 A1**
(43) Date of publication of application: **06.05.2026**
(21) Application number: 25790728.7
(22) Date of filing: 11.04.2025
(51) Int. Cl.: B05C 5/02, B05C 11/10, H01M 4/04

(54) **INSULATING LIQUID FLOW PATH STRUCTURE OF SLOT DIE COATER**

(30) Priority: 17.04.2024 KR 20240051318
(71) Applicant: LG Energy Solution, Ltd., Seoul 07335 (KR)
(72) Inventor: PARK, Min Gu, Daejeon 34122 (KR); MOON, Young Gyu, Daejeon 34122 (KR); CHOI, Min Hyuck, Daejeon 34122 (KR); KIM, Guk Tae, Daejeon 34122 (KR); LIM, Chae Ryeun, Daejeon 34122 (KR); KIM, Min Cheol, Daejeon 34122 (KR)
(74) Representative: Plasseraud IP
(86) International application number: PCT/KR2025/095201
(87) International publication number: WO 2025/221103

(57) **Abstract**

Disclosed herein relates to a slot die coater including a first die block provided with a manifold for accommodating an electrode slurry; a second die block coupled to the first die block; and a coater shim interposed between the first die block and the second die block, wherein the coater shim includes: a body shim that wraps around both sides and the rear surface of the manifold, and a plurality of spacer shims spaced apart between the body shims so as to traverse toward the front surface of the manifold, with concave insulating solution flow path formed on their surfaces, wherein the plurality of spacer shims include: a first spacer shim whose position is fixed relative to the body shim, and a second spacer shim that is movable within the first spacer shim.

## Description

### [Technical Field]

The present disclosure relates to a slot die coater that simultaneously discharges electrode slurry and insulating solution onto an electrode foil, and specifically to an insulating solution flow structure of a slot die coater that allows easy control of the discharge amount of insulating solution by adjusting the position of a spacer shim.

This application claims the benefit of Korean Patent Application No. 10-2024-0051318, filed on April 17, 2024, the disclosure of which is incorporated herein by reference.

### [Background]

Lithium secondary batteries are widely used not only in small devices such as portable electronic devices but also in medium-to-large devices such as battery packs or power storage devices for hybrid vehicles or electric vehicles. In particular, with growing concern over environmental issues, research on electric vehicles and hybrid vehicles, which can replace fossil fuel-powered vehicles such as gasoline and diesel vehicles that are one of the major causes of air pollution, has been actively conducted.

Generally, lithium secondary batteries consist of an electrode assembly, consisting of a positive electrode, a negative electrode, and a separator, is immersed in a lithium electrolyte. The electrodes are formed by coating an electrode slurry containing the active material onto an electrode current collector. For this coating process, coating devices such as a slot die coater are used.

The slot die coater includes an upper die block and a lower die block that form a chamber for supplying the electrode slurry, and a shim member positioned between them to set the height and width of the slot that discharges the active material slurry. The space between the plurality of shim members forms the slot. The height of the slot through which the active material slurry is discharged is determined by the height of the shim member, and the width of the slot is determined by the distance between the spaced-apart shim members.

When coating electrode slurry using a slot die coater, the shape of the edges varies depending on the extent to which the electrode slurry spreads (sliding length). When the spreading extent of the electrode slurry is small, the sliding length that reduces the edge thickness becomes shorter, forming an area thicker than the average thickness. This increases the risk of breakage caused by the side ring during electrode roll winding and increases the risk of N/P ratio reversal.

Conversely, when the spreading extent of the electrode slurry is large, the sliding length increases, reducing the edge thickness. As a result, the capacity decreases proportionally to the lengthening of the sliding part, and there is a risk of lithium precipitation due to air traps. As such, various aspects of the electrode, including capacity, safety, and lifespan, are significantly influenced by the sliding length of the electrode slurry. To control this, a technique involving the simultaneous discharge of insulating solution to the edge of the electrode slurry can be applied. The insulating solution acts as a dam to control the amount of electrode slurry spreading, and by adjusting the discharge volume and width of the insulating solution, the electrode slurry can be controlled to spread to an appropriate level.

The electrode slurry and insulating solution are simultaneously discharged onto the moving electrode, and for this purpose, the shim member of the slot die coater is equipped with an insulating solution flow path. For example, the shim member may be composed of two types: a body shim and a spacer shim, with a plurality of spacer shims disposed in the inner void area of the body shim. The space between the spacer shims forms the discharge slots for the electrode slurry, while the insulating solution is discharged through the concave insulating solution flow path formed on the surface of the spacer shim.

In the structure of this slot die coater, the amount of insulating solution discharged is determined by the insulating solution flow path formed on the spacer shim. Therefore, to adjust or change the amount of insulating solution discharged, the slot die coater must be disassembled and a new spacer shim with different specifications should be installed. Adjusting the insulating solution discharge volume through the replacement of the spacer shim is cumbersome because various specifications of the spacer shim should be prepared in advance, requiring careful design, manufacturing, and management of the spacer shim.

### [Summary]

### [Technical Problem]

The present disclosure aims to provide a slot die coater that can easily control the discharge volume of the insulating solution by adjusting the position of the spacer shim without replacing the shim member of the slot die coater.

However, the technical problems addressed by the present disclosure are not limited to the above-mentioned problems, and other problems not mentioned herein will be clearly understood by those skilled in the art from the description of the disclosure set forth below.

### [Technical Solution]

The present disclosure relates to a slot die coater, and in one example, includes: a first die block provided with a manifold for accommodating an electrode slurry; a second die block coupled to the first die block; and a coater shim interposed between the first die block and the second die block, wherein the coater shim includes: a body shim that wraps around both sides and a rear surface of the manifold, and a plurality of spacer shims spaced apart between the body shims so as to traverse toward the front surface of the manifold, with a concave insulating solution flow path formed on their surfaces, wherein the plurality of spacer shims include: a first spacer shim whose position is fixed relative to the body shim, and a second spacer shim that is movable within the first spacer shim.

Accordingly, a flow cross-sectional area of the insulating solution flow path changes in accordance with a movement of a position of the second spacer shim.

In one embodiment, the second spacer shim is capable of linear movement in a transverse direction.

The first spacer shim is equipped with an accommodating part having an open front surface, wherein the second spacer shim is disposed within the accommodating part, and may be equipped with a guide hole in the form of a long hole extending in the transverse direction, providing a fastening margin relative to a fixing pin located within the accommodating part.

Here, the fixing pin may be provided in the first die block.

In addition, an insulating solution supply hole that supplies insulating solution to the insulating solution flow path may be formed within the first spacer shim.

In addition, a gap between the first spacer shim and the second spacer shim, which is open in the machine direction while communicating with the insulating solution supply hole, may form a portion of a distal end of the insulating solution flow path.

In another embodiment of the present disclosure, the second spacer shim may be capable of performing a rotary motion in which an angle of a centerline relative to a machine direction changes.

The first spacer shim is equipped with an accommodating part having an open front surface, wherein the second spacer shim is disposed within the accommodating part, and may be equipped with a rotary hole that is coupled so that it can perform a rotary motion relative to a fixing pin located inside the accommodating part.

In addition, a circular arc-shaped rotary contact surface, with a center of the fixing pin as a center of curvature, may be formed between the first spacer shim and the second spacer shim,

The fixing pin may be provided on the first die block.

In addition, an insulating solution supply hole that supplies insulating solution to the insulating solution flow path may be formed within the first spacer shim.

In addition, a gap between the first spacer shim and the second spacer shim, which is open in the machine direction while communicating with the insulating solution supply hole, may form a portion of a distal end of the insulating solution flow path.

### [Advantageous Effects]

In this way, the slot die coater according to the present disclosure can adjust the flow cross-sectional area of the insulating solution flow path by moving the position of the second spacer shim without replacing the coater shim.

By adjusting the flow cross-sectional area, the discharge volume of the insulating solution can be easily changed, and the spreading degree of the electrode slurry can be appropriately controlled to improve electrode quality. Additionally, since no separate shim member is required for changing the discharge volume of the insulating solution, maintenance and repair costs and time are saved.

However, the technical effects that can be obtained with the present disclosure are not limited to the effects described above, and other effects not mentioned will be clearly understood by those of ordinary skill in the art from the description of the invention set forth below.

### [Brief Description of the Drawings]

The following drawings accompanying this specification illustrate preferred embodiments of the present disclosure and serve to further illustrate the technical ideas of the disclosure in conjunction with the detailed description of the disclosure that follows, and the disclosure should not be construed as limited to the matters shown in such drawings.
FIG. 1 is a drawing illustrating an example of a conventional slot die coater.
FIG. 2 is an enlarged view of the "A" portion of FIG. 1.
FIG. 3 is a drawing illustrating sliding control achieved by simultaneously discharging electrode slurry and insulating solution.
FIG. 4 is a drawing illustrating the structure of the spacer shim according to an embodiment of the present disclosure.
FIG. 5 is a drawing illustrating an example of adjusting the width of the insulating solution flow path using the spacer shim of FIG. 4.
FIG. 6 is a drawing illustrating the structure of the spacer shim according to another embodiment of the present disclosure.
FIG. 7 is a drawing illustrating an example of decreasing the width of the insulating solution flow path by the spacer shim of FIG. 6.
FIG. 8 is a drawing illustrating an example of expanding the width of the insulating solution flow path by the spacer shim of FIG. 6.

**[Description of Reference Numerals]**

| | | | |
|---|---|---|---|
| 10: | SLOT DIE COATER | 12: | FRONT SURFACE |
| 14: | LIP | 20: | SLOT |
| 30: | INSULATING SOLUTION SLOT | 100: | FIRST DIE BLOCK |
| 110: | MANIFOLD | 120: | FIXING PIN |
| 200: | SECOND DIE BLOCK | 300: | COATER SHIM |
| 310: | BODY SHIM | 320: | SPACER SHIM |
| 330: | FIRST SPACER SHIM | 332: | ACCOMMODATING PART |
| 334: | INSULATING SOLUTION SUPPLY HOLE | | |
| 336: | INSULATING SOLUTION FLOW PATH | | |
| 340: | SECOND SPACER SHIM | 342: | GUIDE HOLE |
| 344: | ROTARY HOLE | | |
| 350: | ROTARY CONTACT SURFACE | | |
| S: | GAP | CL: | CENTER LINE |
| TD: | TRANSVERSE DIRECTION | MD: | MACHINE DIRECTION |

### [Best Mode for Carrying out the Invention]

The present disclosure is subject to various modifications and can have many embodiments, certain of which are described in detail below.

However, this is not intended to limit the disclosure to any particular embodiment and is to be understood to include all modifications, equivalents, or substitutions that fall within the scope of the thought and skill of the present disclosure.

In the present disclosure, the terms "comprising" or "having" and the like are intended to designate the presence of the features, numbers, steps, actions, components, parts, or combinations thereof described, and are not intended to preclude the possibility of the presence or addition of one or more other features, numbers, steps, actions, components, parts, or combinations thereof.

Furthermore, when the present disclosure describes a layer, membrane, region, plate, etc. as being "on top of" another part, this includes not only when it is "directly above" another part, but also when there is another part in between. Conversely, when a layer, membrane, region, plate, etc. is described as being "underneath" another, this includes not only when it is "directly under" another, but also when there is another part in between. Also, in the present application, when a part is the to be disposed "on top of" another part, this may include not only being disposed on the upper part, but also being disposed on the lower part.

The present disclosure relates to a slot die coater, and in one example, includes: a first die block provided with a manifold for accommodating an electrode slurry; a second die block coupled to the first die block; and a coater shim interposed between the first die block and the second die block, wherein the coater shim includes: a body shim that wraps around both sides and the rear surface of the manifold, and a plurality of spacer shims spaced apart between the body shims so as to traverse toward the front surface of the manifold, with a concave insulating solution flow path formed on their surfaces, wherein the plurality of spacer shims include: a first spacer shim whose position is fixed relative to the body shim, and a second spacer shim that is movable within the first spacer shim.

Accordingly, the slot die coater of the present disclosure changes the flow cross-sectional area of the insulating solution flow path depending on the positional movement of the second spacer shim.

As such, the slot die coater according to the present disclosure can adjust the flow cross-sectional area of the insulating solution flow path by moving the position of the second spacer shim without replacing the coater shim.

By adjusting the flow cross-sectional area, the discharge volume of the insulating solution can be easily changed, and the spreading degree of the electrode slurry can be appropriately controlled to improve electrode quality. Additionally, since no separate shim member is required for changing the discharge volume of the insulating solution, maintenance and repair costs and time are saved.

### [Mode for Carrying out the Invention]

Below, with reference to the attached drawings, specific embodiments of the insulating solution flow structure of the slot die coater according to the present disclosure are described in detail. Note that the relative positions indicated by terms such as "front/rear" and "upper/lower/left/right" in the following description are for the purpose of facilitating understanding of the disclosure, and unless otherwise specified, the directions shown in the drawings are used as the reference direction.

### [First embodiment]

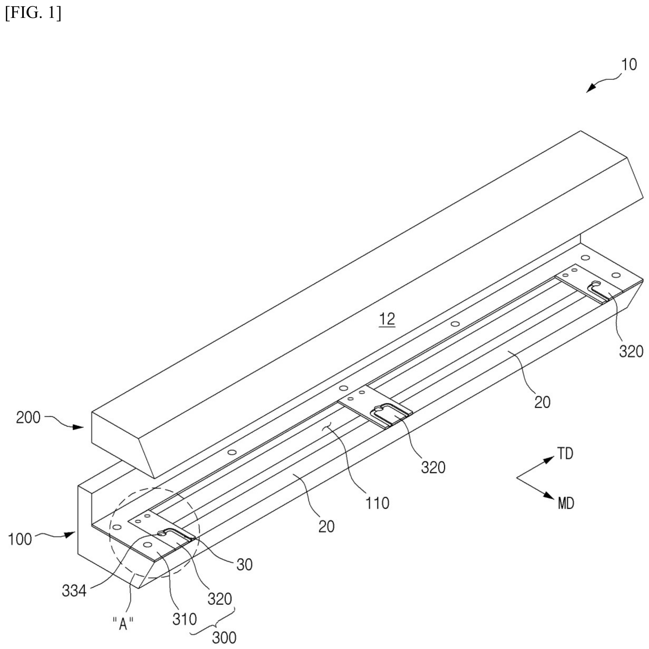

FIG. 1 is a drawing showing an example of a conventional slot die coater 10. For ease of understanding of the present disclosure, the typical configuration of the slot die coater 10 will first be described with reference to FIG. 1.

FIG. 1 is an exploded perspective view of the slot die coater 10, which includes a first die block 100, a second die block 200, and a coater shim 300. Here, the first die block 100, the second die block 200, and the coater shim 300 are the main components of the slot die coater 10, and auxiliary components such as fastening bolts and pipes are omitted from the figure for clarity.

The first die block 100 is a block corresponding to one half of the body of the slot die coater 10, which includes a manifold 110 for accommodating the electrode slurry. The second die block 200 is a block corresponding to the remaining half of the body of the slot die coater 10. The first and second die blocks 100, 200 are mutually fastened to form a single slot die coater 10.

Based on the direction shown in the figure, the first die block 100 can also be referred to as the lower die block, and the second die block 200 can also be referred to as the upper die block. The first die block 100 and the second die block 200 are coupled by a plurality of fastening bolts not shown, allowing them to be disassembled and reassembled. Additionally, the coater shim 300 is positioned between the first die block 100 and the second die block 200.

The coater shim 300 seals the coupling surface between the first die block 100 and the second die block 200. The coater shim 300 prevents the leakage of the electrode slurry pressurized into the manifold 110. Additionally, the coater shim 300 forms a slot 20 on the front surface 12 of the slot die coater 10 for discharging the electrode slurry. Typically, the front surface 12 of the slot die coater 10 includes a protruding part called a lip 14, and the slot 20 is formed along the lip 14.

In the slot die coater 10 shown, the coater shim 300 includes a body shim 310 and a plurality of spacer shims 320. The body shim 310 may form a bent shape that wraps around both sides and the rear surface of the manifold 110. The body shim 310 primarily serves to seal the electrode slurry over a wide area. The plurality of spacer shims 320 are spaced apart between the body shims 310 and arranged to extend across the manifold 110 toward the front surface 12 (i.e., the lip of the slot die coater). The two spacer shims 320 adjacent to both ends in the transverse direction (TD) are tightly pressed against the body shim 310 to prevent the electrode slurry from leaking out.

The thickness of the body shim 310 and the spacer shims 320 is substantially the same, and this thickness defines the height of the slot 20 through which the electrode slurry is discharged. The width of the slot 20 is defined by the spacing between the spacer shims 320 that are spaced apart. In the illustrated embodiment, the coater shim 300 has a structure comprising the body shim 310 and a plurality of spacer shims 320, as replacing the spacer shims 320 instead of the entire coater shim 300 is more efficient in terms of maintenance effort and cost. The corners of the spacer shim 320 are subjected to pressure from the electrode slurry, so their lifespan is limited due to deformation or wear. Therefore, there are many advantages to replacing only the spacer shim 320. However, in the embodiment of the present disclosure described below, it is not excluded that the body shim 310 and the spacer shim 320 are integrally provided.

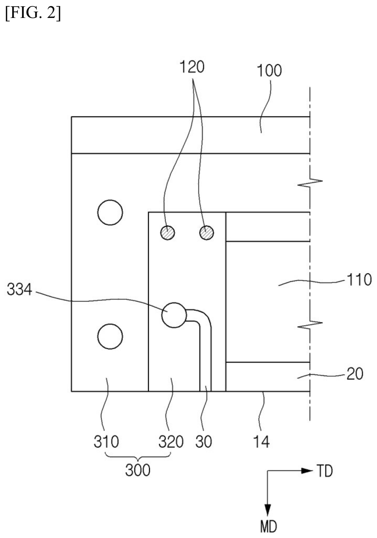

The spacer shim 320 shown in FIG. 1 is equipped with an insulating solution flow path 336 for discharging insulating solution along with the electrode slurry. FIG. 2 is an enlarged view of the "A" portion of FIG. 1, showing the spacer shim 320 equipped with the insulating solution flow path 336 in detail.

As shown in FIG. 2, the spacer shim 320 has a concave insulating solution flow path 336 formed on its surface. The insulating solution flow path 336 has a narrow groove-like shape. One end of the insulating solution flow path 336 is connected to an insulating solution supply hole 334 for supplying insulating solution, and the other end of the insulating solution flow path 336 extends toward and is open to the front surface 12 of the slot die coater 10, i.e., the lip 14. The other end of the open insulating solution flow path 336 forms an insulating solution slot 30.

According to the structure of the coater shim 300, the electrode slurry pressurized and filled into the manifold 110 is discharged outside the lip 14 through the slot 20 between the spacer shims 320 spaced apart across the manifold 110. Additionally, through the insulating solution flow path 336 formed in the spacer shims 320, insulating solution is simultaneously discharged toward both corners of the electrode slurry discharged from the slot 20. This simultaneous discharge of insulating solution controls the extent to which the electrode slurry spreads, i.e., the sliding length of the electrode slurry.

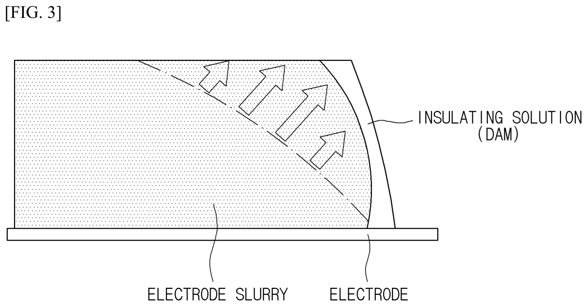

FIG. 3 is a drawing illustrating sliding control achieved by the simultaneous discharge of the electrode slurry and insulating solution. The discharged electrode slurry spreads in the transverse direction (TD) due to its own fluidity, and the extent of this spreading is suppressed by the insulating solution discharged adjacent to the corners. In other words, the insulating solution acts as a dam to suppress the spreading of the electrode slurry, and by adjusting the discharge volume and width of the insulating solution to control the height and width of the dam, the extent of spreading of the electrode slurry can be controlled. Therefore, in the electrode slurry and sliding control, the discharge volume and width of the insulating solution are important factors.

In conventional methods, when simultaneously discharging electrode slurry and insulating solution, adjusting the discharge volume and width of the insulating solution required replacing the entire coater shim 300 where the insulating solution flow path 336 is formed, or at least the spacer shim 320 where the insulating solution flow path 336 is formed. However, adjusting the insulating solution discharge volume through the replacement of the spacer shim 320 requires the prior preparation of spacer shims 320 with various specifications, making the design, manufacturing, and management of the spacer shims 320 cumbersome.

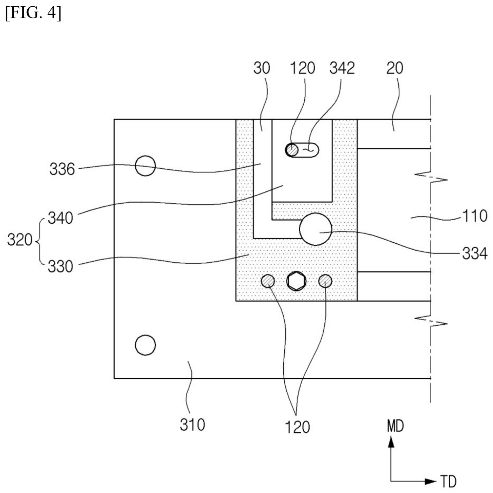

The present disclosure provides a spacer shim 320 that solves these problems, and FIG. 4 shows the structure of the spacer shim 320 according to an embodiment of the present disclosure. The spacer shim 320 in FIG. 4 is designed to adjust the discharge volume and width of the insulating solution by changing the flow cross-sectional area of the insulating solution flow path 336.

Referring to FIG. 4, the spacer shim 320 shown includes a first spacer shim 330 fixedly installed relative to the body shim 310 and a second spacer shim 340 capable of moving within the first spacer shim 330. The insulating solution flow path 336 is formed along the boundary between the first spacer shim 330 and the second spacer shim 340. Therefore, as the distance between the second spacer shim 340 and the fixed first spacer shim 330 changes, i.e., as the position of the second spacer shim 340 relative to the first spacer shim 330 moves, the flow cross-sectional area of the insulating solution flow path 336 changes.

In the embodiment shown in FIG. 4, the second spacer shim 340 is configured to move linearly in the transverse direction (TD, Transverse Direction). Here, the transverse direction (TD) refers to the direction corresponding to the transverse direction (TD) of the electrode traveling relative to the slot 20 that discharges the electrode slurry and the slot die coater 10. As the second spacer shim 340 moves linearly along the transverse direction (TD), the flow cross-sectional area of the insulating solution flow path 336 increases or decreases.

For example, the first spacer shim 330 has an accommodating part 332 with an open front surface, and the second spacer shim 340 can be placed inside the accommodating part 332. The accommodating part 332 includes a fixing pin 120, and the second spacer shim 340 may have a guide hole 342 in the form of a long hole along the transverse direction (TD) to provide a fastening margin relative to the fixing pin 120. The guide hole 342 of the second spacer shim 340 is inserted into the fixing pin 120, and since the guide hole 342 forms a long hole shape along the transverse direction (TD), the second spacer shim 340 can move linearly along the transverse direction (TD).

The assembly of the slot die coater 10 is typically performed by installing the coater shim 300 on the first die block 100, placing the second die block 200 on top of it, and securing them together with fastening bolts to apply sufficient pressure to the coater shim 300. Among the coater shims 300, the body shim 310 and the first spacer shim 330, which maintain a fixed position, are aligned at predetermined positions on the first die block 100 by fixing pins 120 and/or fixing bolts (not shown). The installation position of the second spacer shim 340 is determined relative to the first spacer shim 330, so to ensure accurate positioning, the fixing pin 120 inserted into the guide hole 342 of the second spacer shim 340 may also be provided on the first die block 100.

Furthermore, an insulating solution supply flow path for supplying insulating solution from the outside may be provided on the first die block 100, and in correspondence thereto, an insulating solution supply hole 334 forming one end of the insulating solution flow path 336 may be formed inside the first spacer shim 330. Considering the sealing of the pressurized insulating solution, it may be preferable for the insulating solution supply hole 334 to be formed within the stationary first spacer shim 330.

Furthermore, the insulating solution flow path 336 extends from the insulating solution supply hole 334 toward the front surface of the slot die coater 10, and the gap S between the first spacer shim and the second spacer shim that is open toward the machine direction MD while communicating with the insulating solution supply hole 334 may form a part of the distal end of the insulating solution flow path 336. Here, the machine direction (MD) is the direction perpendicular to the aforementioned transverse direction (TD) and corresponds to the direction in which the electrode, onto which the electrode slurry is applied, travels.

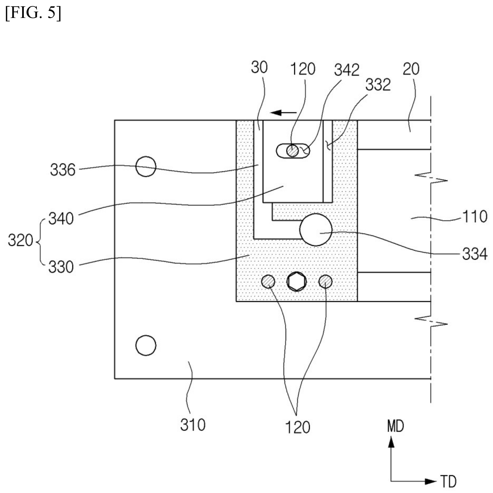

FIG. 5 is a drawing illustrating an example of adjusting the width of the insulating solution flow path 336 by the spacer shim 320 shown in FIG. 4. The gap S between the first spacer shim 330 and the second spacer shim 340, which is open toward the machine direction (MD), forms part of the distal end of the insulating solution flow path 336. In this insulating solution flow path 336 structure, when the second spacer shim 340 moves linearly in the transverse direction (TD), the gap S between the first spacer shim 330 and the second spacer shim 340, which are open toward the machine direction (MD), changes. Ultimately, as the second spacer shim 340 moves in the transverse direction (TD), the flow cross-sectional area of the insulating solution flow path 336 changes, thereby adjusting the discharge volume and width of the insulating solution, and controlling the extent to which the electrode slurry spreads.

### [Second embodiment]

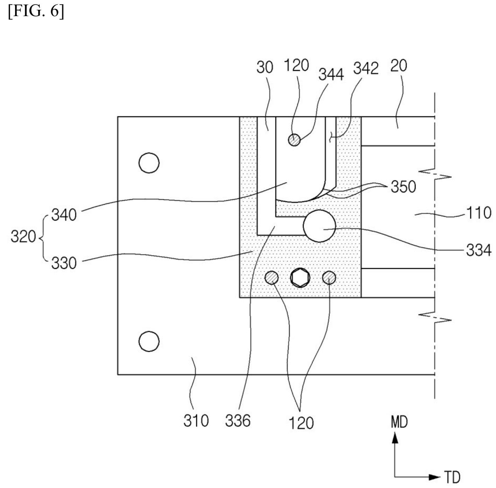

FIG. 6 is a drawing illustrating the structure of the spacer shim 320 according to the second embodiment of the present disclosure. The coater shim 300 is composed of a body shim 310 and a spacer shim 320, the spacer shim 320 includes a first spacer shim 330 fixedly installed relative to the body shim 310 and a second spacer shim 340 capable of positional movement within the fixedly installed first spacer shim 330, which is equivalent to the first embodiment. However, in the second embodiment, the movement structure or method of the second spacer shim 340 is different. Hereinafter, descriptions of content overlapping with those in the first embodiment are omitted, and the movement structure of the second spacer shim 340 is described with a focus on it.

Referring to FIG. 6, the second spacer shim 340 can perform a rotary motion in which the angle of the center line (CL) relative to the machine direction (MD) changes. Here, the center line (CL) represents a virtual line that represents the length of the second spacer shim 340 along the machine direction (MD). In the second embodiment, the second spacer shim 340 can perform a rotary motion such that its center line (CL) remains parallel to or tilts relative to the machine direction (MD).

Specifically, the first spacer shim 330 has an accommodating part 332 with an open front surface, and the second spacer shim 340 is disposed inside the accommodating part 332. Furthermore, the second spacer shim 340 is provided with a rotary hole 344 that allows rotary motion relative to the fixing pin 120 located within the accommodating part 332. Unlike the first embodiment, the rotary hole 344 forms a circular shape corresponding to the cross-sectional shape of the fixing pin 120 and has only a minimal fastening margin sufficient to allow rotary motion relative to the fixing pin 120.

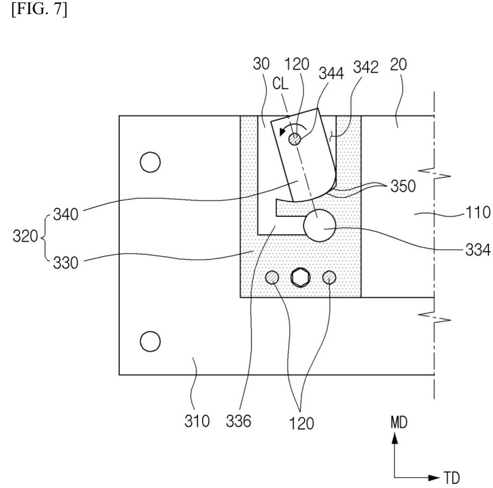

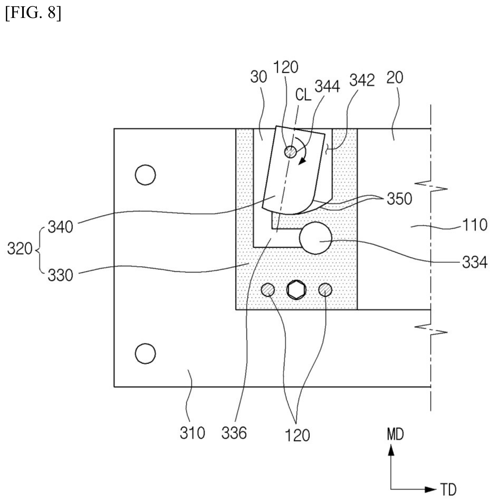

In this structure, the second spacer shim 340 can perform rotary motion within a certain angle centered on the fixing pin 120. As a result, the angle of the center line (CL) of the second spacer shim 340 relative to the machine direction (MD) changes. FIG. 7 is a drawing illustrating an example where the width of the insulating solution flow path 336 is reduced by the rotation of the second spacer shim 340, and FIG. 8 is a drawing illustrating an example where the width of the insulating solution flow path 336 is expanded in the opposite manner. As clearly understood from the drawings, when the second spacer shim 340 rotates in a direction that reduces the gap S between the first spacer shim 330 and the second spacer shim 340, the width of the insulating solution flow path 336 decreases. Conversely, when the second spacer shim 340 rotates in a direction that widens the gap S between the first spacer shim 330 and the second spacer shim 340, the width of the insulating solution flow path 336 expands. In this way, the flow cross-sectional area of the insulating solution flow path 336 can also be changed through the rotary motion of the second spacer shim 340.

Depending on the embodiment, an arc-shaped rotary contact surface 350 may be formed between the first spacer shim 330 and the second spacer shim 340, with the center of the fixing pin 120 as the curvature center. The rotary contact surface 350 accurately guides the rotary motion of the second spacer shim 340. Additionally, the rotary contact surface 350 ensures that the seal between the first spacer shim 330 and the second spacer shim 340 is maintained in good condition regardless of the rotational angle of the second spacer shim 340.

Furthermore, the fixing pin 120 forming the rotational center can be provided on the first die block 100, and the insulating solution supply hole 334 for supplying insulating solution to the insulating solution flow path 336 can be formed inside the first spacer shim 330, the gap S between the first spacer shim 330 and the second spacer shim 340, which is open in the machine direction (MD) and communicates with the insulating solution supply hole 334, may form a portion of the distal end of the insulating solution flow path 336, as already described in the first embodiment.

The present disclosure has been described in more detail above with reference to the drawings and embodiments. However, it should be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A slot die coater comprising:
a first die block provided with a manifold for accommodating an electrode slurry;
a second die block coupled to the first die block; and
a coater shim interposed between the first die block and the second die block, wherein
the coater shim comprises:
a body shim that wraps around both sides and a rear surface of the manifold, and a plurality of spacer shims spaced apart between the body shims so as to traverse toward a front surface of the manifold, with a concave insulating solution flow path formed on their surfaces, wherein
the plurality of spacer shims comprise:
a first spacer shim whose position is fixed relative to the body shim, and a second spacer shim that is movable within the first spacer shim.

2. The slot die coater of claim 1, wherein
a flow cross-sectional area of the insulating solution flow path changes in accordance with a movement of a position of the second spacer shim.

3. The slot die coater of claim 2, wherein
the second spacer shim is capable of linear movement in a transverse direction.

4. The slot die coater of claim 3, wherein
the first spacer shim is equipped with an accommodating part having an open front surface, wherein
the second spacer shim is disposed within the accommodating part, and is equipped with a guide hole in the form of a long hole extending in the transverse direction, providing a fastening margin relative to a fixing pin located within the accommodating part.

5. The slot die coater of claim 4, wherein
the fixing pin is provided in the first die block.

6. The slot die coater of claim 3, wherein
an insulating solution supply hole that supplies insulating solution to the insulating solution flow path is formed within the first spacer shim.

7. The slot die coater of claim 6, wherein
a gap between the first spacer shim and the second spacer shim, which is open in the machine direction while communicating with the insulating solution supply hole, forms a portion of a distal end of the insulating solution flow path.

8. The slot die coater of claim 2, wherein
the second spacer shim is capable of performing a rotary motion in which an angle of a centerline relative to a machine direction changes.

9. The slot die coater of claim 8, wherein
the first spacer shim is equipped with an accommodating part having an open front surface, wherein
the second spacer shim is disposed within the accommodating part, and is equipped with a rotary hole that is coupled so that it can perform a rotary motion relative to a fixing pin located inside the accommodating part.

10. The slot die coater of claim 9, wherein
a circular arc-shaped rotary contact surface, with a center of the fixing pin as a center of curvature, is formed between the first spacer shim and the second spacer shim.

11. The slot die coater of claim 9, wherein
the fixing pin is provided on the first die block.

12. The slot die coater of claim 9, wherein
an insulating solution supply hole that supplies insulating solution to the insulating solution flow path is formed within the first spacer shim.

13. The slot die coater of claim 12, wherein
a gap between the first spacer shim and the second spacer shim, which is open in the machine direction while communicating with the insulating solution supply hole, forms a portion of a distal end of the insulating solution flow path.
